# EUROPÄISCHE PATENTSCHRIFT

(11) **EP 3 597 973 B1**
(45) Veröffentlichungstag und Bekanntmachung des Hinweises auf die Patenterteilung: **16.12.2020**
(21) Anmeldenummer: 18184841.7
(22) Anmeldetag: 20.07.2018
(51) Int. Cl.: F16H 33/02, F16H 35/10, F16K 31/04, F16K 31/53

(54) **GETRIEBEELEMENT SOWIE STELLANTRIEB MIT EINER RÜCKSTELLFEDER UND MIT EINER SELBSTENTRIEGELNDEN GETRIEBEARRETIERUNG**
GEAR ELEMENT AND ACTUATOR WITH A RETURN SPRING AND WITH A SELF-RELEASING GEAR LOCK
ÉLÉMENT DE TRANSMISSION AINSI QUE MÉCANISME DE RÉGLAGE À RESSORT DE RÉINITIALISATION ET À DISPOSITIF D'ARRÊT DE TRANSMISSION À VERROUILLAGE AUTOMATIQUE

(43) Veröffentlichungstag der Anmeldung: 22.01.2020
(73) Patentinhaber: Siemens Schweiz AG, 8047 Zürich (CH)
(72) Erfinder: Böttger, Florian Erich, 6340 Baar (CH); Pally, Andreas, 6319 Allenwinden (CH)
(74) Vertreter: Maier, Daniel Oliver

(56) Entgegenhaltungen:
- EP-A1- 3 279 534
- WO-A1-02/088560
- US-A- 4 621 789
- US-A- 5 174 546
- US-A1- 2003 178 257
- US-A1- 2017 122 420

## Beschreibung

Die vorliegende Erfindung betrifft einen Stellantrieb, aufweisend einen Motor, insbesondere einen Elektromotor, als Antriebselement, einen Stellanschluss als Abtriebsanschluss zum Anschließen einer Klappe oder eines Ventils, um einen gewünschten Volumen- bzw. Luftstroms durch eine Drehstellbewegung am Stellanschluss einzustellen.

Der Stellantrieb umfasst zudem ein Rücklauffederelement sowie ein Getriebeelement für einen Federrücklauf des Stellantriebs, wobei das Antriebselement über das Getriebeelement mit dem Antriebsanschluss zum Antreiben des Antriebsanschlusses in einer Antriebsrichtung mechanisch wirkverbunden ist. Das Rücklauffederelement ist mit dem Antriebselement und/oder dem Getriebeelement und/oder dem Abtriebsanschluss zum Bereitstellen einer Rücklauffunktionalität mechanisch wirkverbunden. Das Getriebeelement weist zumindest ein Zahnradelement mit einer wenigstens abschnittsweisen Bezahnung sowie ein Arretierelement auf. Das Arretierelement weist einen Arretierabschnitt zum arretierenden Eingreifen in die Bezahnung des zumindest einen Zahnradelements auf zum Verhindern einer Rotation des zumindest einen Zahnradelements in einer Rücklaufrichtung.

Aus der veröffentlichten Patentanmeldung US 2017/122420 A1 ist ein elektrisches Stellglied mit einer ersten Antriebsquelle bekannt, die über einen ersten Pfad, der durch ein Getriebe erzeugt wird, an einen Ausgang gekoppelt ist, und einer zweiten Antriebsquelle, die über einen zweiten Pfad, der durch das Getriebe erzeugt wird, an den Ausgang gekoppelt ist. Bei Ausfall der elektrischen Energie wird der Ausgang in eine ausfallsichere Position gebracht. Das elektrische Stellglied weist nach einem dortigen Ausführungsbeispiel gemäß FIG 4 eine erste Bremse 500 auf, welche die Bewegung einer rotierenden Komponente wie einer Welle, eines Getriebes oder ähnlichem einschränkt oder verhindert. Zum Beispiel kann die erste Bremse zugeschaltet werden, um das Drehen eines Abtriebszahnrades 301 zu verhindern. Die erste Bremse kann z.B. eine Magnet-, pneumatische, hydraulische, gestängebasierte und/oder elektromagnetische Bremse sein. Gemäß dem dortigen Beispiel enthält die erste Bremse eine erste Magnetspule 501 mit einer Magnetwelle 503, einem Hebel 505, einer Ausgangsbremse 520, einem Bremsgehäuse 530, einer Halterung 535 und mit einer elastisch verformbaren Bremsfeder 537.

Typischerweise weist der Stellanschluss ein dem Motor nachgeschaltetes (Reduzier-)Getriebe mit einem solchen Getriebeelement auf. Ausgangsseitig wirkt das Getriebe dann auf den Stellanschluss. Ein Teil dieses Getriebes ist ein sogenannter Federrücklauf, der zumindest das Rücklauffederelement, das Getriebeelement sowie das Arretierelement umfasst.

Stellantriebe mit Rückstellfeder - sogenannte Spring-Return-Stellantriebe - und deren Getriebeelemente sind grundsätzlich bekannt. Durch einen derartigen Stellantrieb kann, bereitgestellt insbesondere auch über ein Getriebeelement des Stellantriebs, eine angetriebene Bewegung, insbesondere eine Drehbewegung, in eine erste Richtung bereitgestellt werden. Bei dieser insbesondere durch einen Motor angetriebenen Bewegung in die erste Richtung wird zumeist gleichzeitig ein Rücklauffederelement vorgespannt, das zur Bereitstellung einer zweiten Bewegung, deren Bewegungsrichtung der ersten Bewegungsrichtung entgegengesetzt ist, vorgesehen ist. Auf diese Weise kann insbesondere beispielsweise bei einem Stromausfall ein automatisches Bereitstellen einer Rückbewegung in der zweite Bewegungsrichtung sichergestellt werden.

In einem Getriebeelement des Stellantriebs ist oftmals ein Arretierelement integriert, durch das eine Bewegung des gesamten Federrücklaufs, insbesondere in die zweite Bewegungsrichtung angetrieben durch das Rücklauffederelement, blockiert und bevorzugt gesteuert und/oder kontrolliert freigegeben werden kann. Ein bevorzugtes Anwendungsgebiet derartiger Stellantriebe sind Lüftungsklappen in Lüftungssystemen, die eingesetzt werden, um insbesondere Strömungen von Fluiden, beispielsweise Luft oder anderen Gasen, in Rohrleitungen des Lüftungssystems zu steuern und/oder zu kontrollieren.

Wie oben beschrieben, werden in den Getriebeelementen von Stellantrieben zumeist Arretierelemente eingesetzt, um eine Blockierung einer Bewegung des Federrücklaufs bereitzustellen. Dafür kann beispielsweise ein Arretierabschnitt des Arretierelements in eine Bezahnung eines Zahnradelements des Getriebeelements des Federrücklaufs eingreifen. Das Zahnradelement und damit das gesamte Getriebeelement werden dadurch blockiert. Bei einer, insbesondere beispielsweise durch einen Benutzer forcierten, Bewegung des gesamten Federrücklaufs bzw. des Getriebeelements entgegen der Antriebsrichtung kann es bei einer gleichzeitigen Blockierung durch das Arretierelement zu einer Beschädigung, beispielsweise am Zahnradelement oder am Arretierelement, kommen. Aufwendige Reparaturmaßnahmen können in diesem Fall notwendig sein.

Es ist daher Aufgabe der vorliegenden Erfindung, die voranstehend beschriebenen Nachteile bei Stellantrieben zumindest teilweise zu beheben. Insbesondere ist es Aufgabe der vorliegenden Erfindung, einen Stellantrieb bereitzustellen und/oder zu verbessern, der auf besonders einfache und kostengünstige Art und Weise einen möglichst sicheren Betrieb des Stellantriebs ermöglicht, wobei insbesondere eine Beschädigung der Elemente insbesondere des Getriebeelements auch bei einer erzwungenen Bewegung in einer Rücklaufrichtung verhindert werden können und wobei ferner eine besonders kompakte Ausgestaltung der eingesetzten Bauteile bereitgestellt werden soll.

Voranstehende Aufgabe wird gelöst durch einen Stellantrieb mit den Merkmalen des unabhängigen Anspruchs 1. Weitere Merkmale und Details der Erfindung ergeben sich aus den abhängigen Ansprüchen, der Beschreibung und den Zeichnungen.

Ein Getriebeelement des erfindungsgemäßen ist dadurch gekennzeichnet, dass das Arretierelement ein mit dem Arretierabschnitt mechanisch wirkverbundenes sowie zumindest teilweise elastisch verformbares Sicherheitselement aufweist zum Freigeben der Arretierung des zumindest einen Zahnradelements durch eine elastische Verformung des Sicherheitselements bei einem Drehmoment des zumindest einen Zahnradelements in Rücklaufrichtung, welches größer ist als eine Sicherheitsdrehmomentgrenze.

Ein Getriebeelement des erfindungsgemäßen Stellantriebs ist für einen Einsatz in einem Stellantrieb, d.h. in einem Federrücklauf eines Stellantriebs vorgesehen. Mit anderen Worten wird das Getriebeelement in dem Stellantrieb bevorzugt derart eingesetzt, dass es eine Antriebsbewegung eines Antriebs des Stellantriebs mechanisch auf einen Abtriebsabschnitt überträgt, wobei eine Drehgeschwindigkeit bzw. ein Drehmoment der Bewegung in der Antriebsrichtung durch das Getriebeelement verändert werden kann. Gleichzeitig weisen derartige Stellantriebe zumeist ein Rücklauffederelement auf, das bei einer Bewegung des gesamten Getriebeelements in einer Antriebsrichtung vorgespannt wird. Bei einer Auslösung des Federrücklaufs im Stellantrieb gibt das Rücklauffederelement die in ihm gespeicherte mechanische Energie wieder über das Getriebeelement ab, das sich dann in einer Rücklaufrichtung entgegengesetzt zur Antriebsrichtung bewegt. Ein Bewegen im Sinne der Erfindung ist insbesondere als ein Drehen von Zahnrädern bzw. Zahnradelementen des Getriebeelements zu verstehen. Um ein ungewolltes Bewegen des Getriebeelements und damit des gesamten Federrücklaufs in Rücklaufrichtung zu verhindern, weist ein Getriebeelement des erfindungsgemäßen Stellantriebs ein Arretierelement auf. Dieses Arretierelement umfasst insbesondere einen Arretierabschnitt, der für ein arretierendes Eingreifen in eine Bezahnung eines Zahnradelements des Getriebeelements ausgebildet ist, beispielsweise durch eine entsprechende Form und/oder dreidimensionale Ausgestaltung. Die Bezahnung des zumindest einen Zahnradelements kann zumindest abschnittsweise am zumindest einen Zahnradelement vorgesehen sein, bevorzugt jedoch sogar vollständig umlaufend. Durch ein Eingreifen des Arretierabschnitts in diese Bezahnung wird eine Bewegung, insbesondere eine Rotation, des zumindest einen Zahnradelements verhindert, wodurch das gesamte Getriebeelement und damit der gesamte Federrücklauf hinsichtlich einer Bewegung insbesondere in die Rücklaufrichtung blockiert ist.

Ein Getriebeelement des erfindungsgemäßen Stellantriebs ist dahingehend ausgebildet, dass eine Sicherheit beim Betreiben des Getriebeelements und des Stellantriebs erhöht werden kann. Dies kann insbesondere dadurch bereitgestellt werden, dass das Arretierelement ein mit dem Arretierabschnitt mechanisch wirkverbundenes Sicherheitselement aufweist. Dieses Sicherheitselement ist zumindest teilweise elastisch verformbar ausgebildet. Für diesen Zweck ist das Sicherheitselement aus einem entsprechenden Material gefertigt, beispielsweise einem Federstahl, einem elastisch verformbaren Kunststoffmaterial oder Ähnlichem. Das Sicherheitselement ist derart ausgebildet, dass durch eine elastische Verformung des Sicherheitselements die Arretierung des Arretierabschnitts an der Bezahnung des zumindest einen Zahnradelements aufgehoben bzw. freigegeben werden kann. Mit anderen Worten wird durch eine elastische Verformung des Sicherheitselements das Eingreifen des Arretierabschnitts in die Bezahnung des zumindest einen Zahnradelements beendet.

Dies kann beispielsweise insbesondere dadurch bereitgestellt werden, dass durch die elastische Verformung des Sicherheitselements und über die mechanische Wirkverbindung zwischen dem Sicherheitselement und dem Arretierabschnitt der Arretierabschnitt aus der Position, in der er in die Bezahnung des zumindest eine Zahnradelements eingreift, wegbewegt wird. Die Sicherheit beim Betreiben des Getriebeelements wird insbesondere dadurch erhöht, dass diese elastische Verformung des Sicherheitselements in Abhängigkeit eines Drehmoments, das auf das zumindest eine Zahnradelement in Rücklaufrichtung wirkt, ausgebildet ist. Insbesondere wird sich die elastische Verformung des Sicherheitselements nur dann einstellen beziehungsweise zumindest nur dann wirkungsvoll einstellen, wenn das wirkende Drehmoment auf das Zahnradelement größer ist als eine Sicherheitsdrehmomentgrenze. Mit anderen Worten bleibt das zumindest eine Zahnrad durch den Eingriff des Arretierabschnitts in die Bezahnung arretiert, solange das auf das zumindest eine Zahnrad in Rücklaufrichtung wirkende Drehmoment kleiner ist als die Sicherheitsdrehmomentgrenze. Eine Grundfunktionalität des Getriebeelements als Teil eines Federrücklaufs im Stellantrieb, insbesondere ein insbesondere steuerbares und/oder regelbares Blockieren einer Bewegung des Getriebeelements in Rücklaufrichtung, kann auf diese Weise sichergestellt werden. Gleichzeitig kann, wenn das auf das zumindest eine Zahnradelement wirkende Drehmoment größer ist als die Sicherheitsdrehmomentgrenze, die Arretierung bzw. die Blockade des zumindest einen Zahnradelements automatisch durch die elastische Verformung des Sicherheitselements aufgehoben werden. Mit anderen Worten wirkt in Rücklaufrichtung das Drehmoment des zumindest einen Zahnradelements auf den Arretierabschnitt, der in die Bezahnung eingreift, und damit über die entsprechende mechanische Wirkverbindung auch auf das Sicherheitselement. Bei einem Drehmoment, das kleiner ist als die Sicherheitsdrehmomentgrenze, bleibt dies zumindest im Wesentlichen ohne Folgen, insbesondere erfolgt keine oder nur eine geringe beziehungsweise bevorzugt nur unwesentliche Verformung des Sicherheitselements. Folglich verbleibt der Arretierabschnitt in seiner blockierenden eingreifenden Position.

Übersteigt das Drehmoment in Rücklaufrichtung des Zahnradelements jedoch die Sicherheitsdrehmomentgrenze, so erfolgt nun eine elastische Verformung des Sicherheitsdrehmoments, und durch die mechanische Wirkverbindung zum Arretierabschnitt wird dieser derart bewegt, dass das Eingreifen in die Bezahnung des zumindest einen Zahnradelements beendet wird. Auf diese Weise kann somit eine Bewegung des gesamten Getriebeelements und dadurch des Federrücklaufs in Rücklaufrichtung ermöglicht werden. Eine Beschädigung, insbesondere des Arretierabschnitts und/oder des zumindest einen Zahnradelements, kann auf diese Weise verhindert werden. Durch das Vorhandensein des erfindungsgemäßen Sicherheitselements kann insbesondere auch auf zusätzliche, insbesondere extern vorhandene und mechanisch aufwändige, Vorrichtungen verzichtet werden, die gemäß dem Stand der Technik eine entsprechende Sicherheit beim Betreiben eines Federrücklaufs mit einem Getriebeelement bereitstellen. Der benötigte Bauraum kann auf diese Weise verkleinert werden, mit allen damit verbundenen Vorteilen, beispielsweise hinsichtlich von Herstellungskosten und/oder einer Fertigungsdauer.

Insbesondere könnte der erfindungsgemäße Vorteil des elastisch verformbaren Sicherheitselements auch durch ein inelastisch verformbares Sicherheitselement bereitgestellt werden. Jedoch wäre dies nur ein einziges Mal möglich, sodass in diesem Fall ein weiteres Benutzen des Getriebeelements oftmals nicht mehr möglich ist, da die Verformung des Sicherheitselements dauerhaft ist. Zumindest eine erfindungsgemäß bereitgestellte Erhöhung der Sicherheit beim Betreiben des Getriebeelements kann dann nicht mehr bereitgestellt werden.

Ferner kann beim Getriebeelement des erfindungsgemäßen Stellantriebs vorgesehen sein, dass die Sicherheitsdrehmomentgrenze größer ist als ein durch ein Rücklauffederelement des Federrücklaufs im Stellantrieb am zumindest einen Zahnradelement erzeugbares Drehmoment. Das Arretierelement und dessen Arretierabschnitt des Getriebeelements des erfindungsgemäßen Stellantriebs werden dafür eingesetzt, um insbesondere eine Rücklauffunktionalität des Federrücklaufs dahingehend bereitzustellen. Eine derartige Rücklauffunktionalität umfasst insbesondere, dass eine Bewegung des gesamten Federrücklaufs in Rücklaufrichtung, angetrieben durch ein Rücklauffederelement, nur dann bereitgestellt wird, wenn kontrolliert und/oder gesteuert durch das Arretierelement, diese Bewegung durch ein Freigeben des zumindest einen Zahnradelements aktiv ermöglicht wird. Durch eine Sicherheitsdrehmomentgrenze, die größer ist als ein durch ein Rücklauffederelement des Federrücklaufs am zumindest einen Zahnradelement erzeugbares Drehmoment, kann dies besonders einfach sichergestellt werden. Sämtliche Bewegungen, die durch das Rücklauffederelement ausgelöst werden könnten, können somit sicher durch ein Arretierelement eines Getriebeelements des erfindungsgemäßen Stellantriebs gesteuert blockiert und/oder freigegeben werden. Erst bei zusätzlichen, insbesondere noch größeren, Drehmomenten, kann und wird die elastische Verformung des Sicherheitselements auftreten. Eine Rücklauffunktionalität kann somit durch ein erfindungsgemäßes Getriebeelement ohne Einschränkungen für einen Einsatz in einem Federrücklauf bereitgestellt werden.

Darüber hinaus kann beim Getriebeelement des erfindungsgemäßen Stellantriebs vorgesehen sein, dass der Arretierabschnitt einen Arretierzahn zum Eingreifen in die Bezahnung des zumindest einen Zahnradelements aufweist. Ein derartiger Arretierzahn kann insbesondere an die Bezahnung des zumindest einen Zahnradelements angepasst ausgebildet sein, beispielsweise hinsichtlich einer Form der Flanken, einer Anzahl der Zähne und/oder einem Böschungswinkel der Zähne der Bezahnung des zumindest einen Zahnradelements. Ein besonders gutes und insbesondere formschlüssiges Eingreifen des Arretierabschnitts in die Bezahnung des zumindest einen Zahnradelements kann auf diese Weise vereinfacht bereitgestellt werden.

Auch kann bei einem Getriebeelement des erfindungsgemäßen Stellantriebs ferner vorgesehen sein, dass der Arretierabschnitt einen Arretierhebel aufweist, wobei der Arretierhebel an einem Grundelement des Arretierelements um eine Arretierachse drehbar gelagert ist, und wobei ferner der Arretierhebel durch die elastische Verformung des Sicherheitselements aus einer Funktionsstellung in eine Sicherheitsstellung bringbar ist. Durch einen derartigen Arretierhebel, der um eine Arretierachse an einem Grundelement des Getriebeelements drehbar gelagert ist, kann ein weiterer Freiheitsgrad für eine Bewegung des gesamten Arretierelements bereitgestellt werden. So kann beispielsweise besonders bevorzugt ein Arretierzahn an einem von der Arretierachse abgewandten Ende des Arretierhebels angeordnet sein. Auf diese Weise kann besonders einfach bereitgestellt werden, dass beispielsweise der Arretierzahn in der Funktionsstellung des Arretierhebels zum Eingreifen in die Bezahnung des zumindest einen Zahnradelements ausgebildet ist, wobei er in der Sicherheitsstellung des Arretierhebels, in der der Arretierhebel um die Arretierachse um einen Sicherheitswinkel verdreht ist, ein derartiges Eingreifen in die Bezahnung des zumindest einen Zahnradelements aufgehoben ist. Insbesondere kann durch das Vorsehen eines derartigen Arretierhebels bereitgestellt werden, dass nicht das gesamte Arretierelement zum Bereitstellen der Sicherheitsfunktionalität eines Getriebeelements des erfindungsgemäßen Stellantriebs verschwenkt bzw. bewegt werden muss.

Auch kann ein Getriebeelement des Stellantriebs dahingehend weiterentwickelt sein, dass das Sicherheitselement als ein mit dem Arretierhebel mechanisch wirkverbundenes Sicherheitsfederelement ausgebildet ist. Ein derartiges Sicherheitsfederelement kann beispielsweise eine Spiralfeder, eine Blattfeder oder Ähnliches sein. Federn stellen besonders einfache, elastisch verformbare Sicherheitselemente dar. Ein Getriebeelement des erfindungsgemäße Stellantriebs kann auf diese Weise somit weiter vereinfacht ausgebildet werden.

Gemäß einer besonders bevorzugten Weiterentwicklung eines Getriebeelements des erfindungsgemäßen Stellantriebs kann ferner vorgesehen sein, dass das Arretierelement einen Arretieranschlag zum Begrenzen und/oder Festlegen der Sicherheitsstellung des Arretierhebels aufweist. Der Arretierhebel in seiner Sicherheitsstellung ist insbesondere innerhalb des Getriebeelements derart angeordnet, dass ein Eingreifen des Sicherheitsabschnitts in die Bezahnung des zumindest einen Zahnradelements nicht mehr möglich ist. Um diese Sicherheitsstellung festzulegen bzw. zu begrenzen, kann besonders bevorzugt ein Arretieranschlag vorgesehen sein, bei dem beispielsweise der Arretierhebel formschlüssig anliegt, wenn er sich in seiner Sicherheitsstellung befindet. Ein Weiterbewegen des Arretierhebels über die Sicherheitsstellung hinaus kann durch einen derartigen Arretieranschlag somit verhindert werden. Eine besonders kompakte Ausgestaltungsform eines Getriebeelements des erfindungsgemäßen Stellantriebs kann auf diese Weise bereitgestellt werden.

Darüber hinaus kann ein Getriebeelement des erfindungsgemäßen Stellantriebs dahingehend weiterentwickelt sein, dass das Sicherheitsfederelement zwischen dem Arretieranschlag und dem Arretierhebel angeordnet ist. Dies stellt eine besonders bevorzugte Anordnungsart des Sicherheitsfederelements dar. Durch die Anordnung des Sicherheitsfederelements zwischen dem Arretieranschlag und dem Arretierhebel kann das Sicherheitsfederelement, beispielsweise ausgestaltet als eine Spiralfeder, besonders platzsparend angeordnet werden und insgesamt auch besonders klein und mit wenig Bauraumbedarf bereitgestellt werden. Eine Kompaktheit eines Getriebeelements des erfindungsgemäßen Stellantriebs, insbesondere des Arretierelements des Getriebeelements, kann dadurch weiter gesteigert werden.

Ferner kann bei einem Getriebeelement des erfindungsgemäßen Stellantriebs vorgesehen sein, dass das Arretierelement ein Grundhebelelement aufweist, wobei das Grundhebelelement an einer Grundachse drehbar gelagert ist und der Arretierabschnitt beabstandet von der Grundachse am Grundhebelelement angeordnet ist, und wobei ferner das Grundhebelelement in eine Freigabestellung, in welcher der Arretierabschnitt das zumindest eine Zahnradelement freigibt, und in eine Arretierposition, in welcher der Arretierabschnitt in das zumindest eine Zahnradelement arretierend eingreift, bringbar ist. Durch ein derartiges Grundhebelelement, das beispielsweise ein Grundelement des Getriebeelements bilden kann, kann insbesondere besonders einfach eine kontrollierbare und/oder regelbare Bewegung des gesamten Arretierabschnitts zum Bereitstellen der eigentlichen Arretierfunktion des Arretierelements bereitgestellt werden. Dafür kann der Arretierabschnitt des Arretierelements beabstandet von der Grundachse am Grundhebelelement angeordnet sein, wodurch sich bei einer Drehung des Grundhebelelements um die Grundachse der Arretierabschnitt automatisch, und bedingt durch den Abstand von der Grundachse mit größerem Bewegungsradius bewegt. Insbesondere bewegt sich der Arretierabschnitt derart weit, dass er zwischen einer Freigabestellung, in welcher der Arretierabschnitt das zumindest eine Zahnradelement freigibt, und einer Arretierposition, in welcher der Arretierabschnitt in das zumindest eine Zahnradelement arretierend eingreift, bewegt werden kann. Dies kann insbesondere geregelt und/oder gesteuert vorgenommen werden, sodass ein geregeltes und/oder gesteuertes Auslösen der Rücklauffunktionalität des Federrücklaufs durch ein Getriebeelement des erfindungsgemäßen Stellantriebs besonders einfach bereitgestellt werden kann.

Besonders bevorzugt kann ein Getriebeelement des erfindungsgemäßen Stellantriebs dahingehend weiterentwickelt sein, dass das Grundhebelelement das Sicherheitselement umfasst, insbesondere dass das Grundhebelelement das Sicherheitselement bildet. Mit anderen Worten kann vorgesehen sein, dass das Grundhebelelement zumindest abschnittsweise elastisch verformbar ausgebildet ist. Für diesen Zweck kann das Grundhebelelement beispielsweise aus einem elastisch verformbaren Material bestehen bzw. dieses umfassen, beispielsweise Federstahl und/oder ein elastisch verformbares Kunststoffmaterial. Zum einen kann vorgesehen sein, dass das Grundhebelelement abschnittsweise das Sicherheitselement bildet, wobei beispielsweise ein begrenzter Abschnitt zwischen der Grundachse und dem Arretierabschnitt elastisch verformbar ausgebildet ist. In einer alternativen Ausgestaltungsform kann auch das gesamte Grundhebelelement elastisch verformbar ausgebildet sein und bildet so in seiner Gesamtheit das Sicherheitselement. Auf diese Weise können besonders viele verschiedene und insbesondere an den jeweiligen Bedingungen und Anforderungen an das Getriebeelement des erfindungsgemäßen Stellantriebs angepasste Ausgestaltungen des Grundhebelelements bereitgestellt werden.

Weitere Vorteile, Merkmale und Einzelheiten der Erfindung ergeben sich aus der nachfolgenden Beschreibung, in der unter Bezugnahme auf die Zeichnung ein Ausführungsbeispiel der Erfindung im Einzelnen beschrieben ist. Es zeigt schematisch:

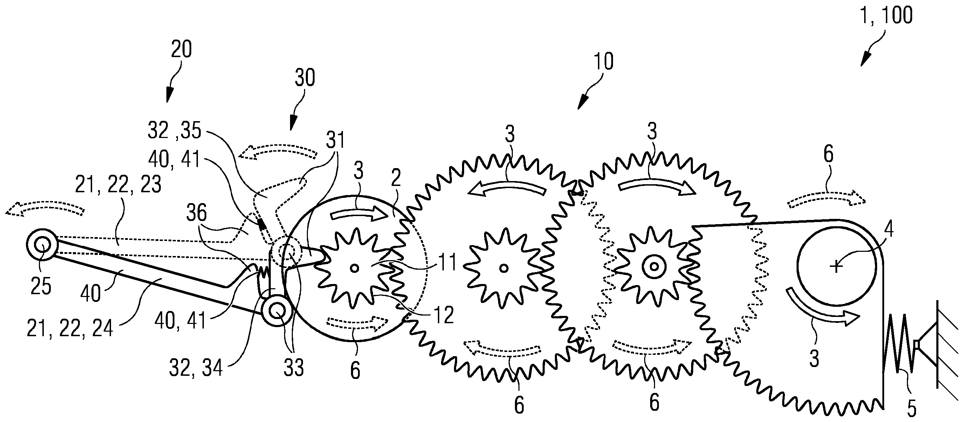

- Fig. 1: einen erfindungsgemäßen Stellantrieb mit einem selbstentriegelnde arretierbaren Getriebeelement.

In Fig. 1 ist ein erfindungsgemäßer Stellantrieb 1 gezeigt. Ein den Stellantrieb 1 umgebendes Gehäuse ist aus Gründen der Übersichtlichkeit nicht dargestellt. Durch seinen Federrücklauf kann insbesondere eine mechanische Antriebsenergie eines Antriebselements 2, hier eine Elektromotor, auf einen Abtriebsanschluss bzw. Stellanschluss 4 übertragen werden. Am Stellanschluss 4 kann insbesondere ein Lüftungsklappe oder ein Ventil mechanisch wirkverbunden angeschlossen sein. Über ein Getriebeelement 10 kann eine mechanische Wirkverbindung zwischen dem Antriebselement 2 und dem Stellanschluss 4 bereitgestellt werden. Das Antriebselement 2 ist insbesondere zum Bereitstellen einer Bewegung in einer Antriebsrichtung 3 ausgebildet. Bei einer derartigen Bewegung des gesamten Federrücklaufs, insbesondere auch des Getriebeelements 10, in Antriebsrichtung 3 wird das Rücklauffederelement 5 des Federrücklaufs vorgespannt. Um ein sofortiges Bewegen des Getriebeelements 10 und damit des Federrücklaufs des Stellantriebs 1 bei einer Abschaltung des Antriebselements 2 in die Rücklaufrichtung 6 zu verhindern, weist das Getriebeelement 10 des erfindungsgemäßen Stellantriebs 1 insbesondere ein Arretierelement 20 auf. Ein Arretierabschnitt 30 des Arretierelements 20 ist zum insbesondere formschlüssigen Eingreifen in eine Bezahnung 12 eines Zahnradelements 11 des Getriebeelements 10 ausgebildet. Auf diese Weise kann eine Bewegung des Getriebeelements 10 und damit des gesamten Federrücklaufs in die Rücklaufrichtung 6 blockiert werden. Dieser Zustand ist in Fig. 1 in Bezug auf das Arretierelement 20 durchgezogen dargestellt. Das Arretierelement 20 weist neben dem Arretierabschnitt 30 mit dem Arretierzahn 31 ein Grundhebelelement 22 als Grundelement 21 auf. Dieses Grundhebelelement 22 ist um eine Grundachse 25 drehbar gelagert und ist in der durchgezogenen Darstellung in seiner Arretierposition 24 gezeigt. In dieser Arretierposition 24 des Arretierelements 20 greift der als Arretierzahn 31 ausgebildete Teil des Arretierabschnitts 30 in die Bezahnung 12 des zumindest einen Zahnradelements 11 ein und blockiert dieses. Gleichzeitig weist der dargestellte Arretierabschnitt 30 einen Arretierhebel 32 auf, der um eine Arretierachse 33 drehbar gelagert ist und sich in der durchgezogenen Darstellung in seiner Funktionsstellung 34, in der der Arretierzahn 31 zum formschlüssigen Eingreifen in die Bezahnung 12 des Zahnradelements 11 ausgebildet ist, dargestellt ist. Weitere Bestandteile des erfindungsgemäßen Arretierelements 20 sind ein Arretieranschlag 36 und ein zwischen dem Arretieranschlag 36 und dem Arretierhebel 32 angeordnetes Sicherheitsfederelement 41, das im Folgenden beschrieben wird.

Problematisch kann es sein, wenn die eine Bewegung des Getriebeelements 10 bzw. des gesamten Federrücklaufs des Stellantriebs 1 in Rücklaufrichtung 6 forciert oder von außen gewaltsam ausgeführt werden soll, insbesondere dann, wenn das zumindest eine Zahnradelement 11 durch ein Eingreifen des Arretierabschnitts 30 in die Bezahnung 12 blockiert ist. Dies kann beispielsweise bei einer unbedachten Bewegung einer am Stellanschluss 4 angeschlossenen Lüftungsklappe in Rücklaufrichtung 6 durch einen Benutzer auftreten. Um eine Beschädigung zum Beispiel des zumindest einen Zahnradelements 11 bzw. des Arretierabschnitts 30, das in der dargestellten Ausgestaltungsform insbesondere einen Arretierzahn 31 aufweist, zu verhindern, ist das Arretierelement 20 des Getriebeelements 10 des erfindungsgemäßen Stellantriebs 1 speziell ausgebildet. Insbesondere weist das Arretierelement 20 ein mit dem Arretierabschnitt 30 mechanisch wirkverbundenes sowie zumindest teilweise elastisch verformbares Sicherheitselement 40 auf. In der dargestellten Ausgestaltungsform kann das Sicherheitselement 40 insbesondere als ein Sicherheitsfederelement 41 ausgebildet sein, das zwischen einem Arretierhebel 32 und einem Arretieranschlag 36 angeordnet sein kann. Alternativ oder zusätzlich zur Ausgestaltung als zusätzliches Sicherheitsfederelement 41 kann auch ein Grundhebelelement 22 das Sicherheitselement 40 umfassen oder dieses bilden. Der Arretierhebel 32 ist um eine Arretierachse 33 an einem Grundelement 21 des Arretierelements 20, hier einem Grundhebelelement 22, um eine Arretierachse 33 drehbar gelagert. Durch eine elastische Verformung des Sicherheitsfederelements 41 bei einer Bewegung des Zahnradelements 11 in Rücklaufrichtung 6, wobei das durch diese Bewegung erzeugte Drehmoment insbesondere größer ist als eine Sicherheitsdrehmomentgrenze, kann nun das zumindest teilweise elastisch verformbare Sicherheitselement 40 elastisch verformt werden, wodurch ein Lösen des Eingreifens des Arretierabschnitts 30 des Arretierelements 20 in die Bezahnung 12 des Zahnradelements 11 des Getriebeelements 10 aufgehoben wird. Dies ist in Fig. 1 hinsichtlich des Arretierelements 20 in gestrichelter Darstellung dargestellt. Deutlich sichtbar ist zum einen, dass der Arretierhebel 32 aus seiner Funktionsstellung 34 in seine Sicherheitsstellung 35 verbracht ist, wobei dies insbesondere durch das elastische Verformen des Sicherheitsfederelements 41 bereitgestellt werden kann. Durch den Arretieranschlag 36 kann gleichzeitig diese Sicherheitsstellung 35 definiert und insbesondere begrenzt festgelegt werden. Gleichzeitig kann auch sich das Grundhebelelement 22 aus seiner Arretierposition 24 in seine Freigabeposition 23 bewegen, wodurch das formschlüssige Eingreifen des Arretierzahns 31 in die Bezahnung 12 des Zahnradelements 11 noch sicherer vermieden beziehungsweise aufgehoben werden kann. Gleichzeitig kann besonders bevorzugt, um eine Rücklauffunktionalität des erfindungsgemäßen Federrücklaufs 1 auch sicher bereitstellen zu können, die Sicherheitsdrehmomentgrenze derart gewählt werden, dass diese größer ist als ein durch das Rücklauffederelement 5 des Federrücklaufs am zumindest einen Zahnradelement 11 erzeugbaren Drehmoments. Bei einem durch das Rücklauffederelement 5 erzeugten Drehmoment tritt somit keine oder nur eine unwesentliche Verformung des Sicherheitselements 40 auf, wodurch das zumindest eine Zahnradelement 11 weiterhin durch den Arretierabschnitt 30 blockiert bleibt.

### Bezugszeichenliste

- 1: Stellantrieb
- 2: Motor, Elektromotor, Antriebselement
- 3: Antriebsrichtung
- 4: Stellanschluss, Abtriebsanschluss
- 5: Rücklauffederelement
- 6: Rücklaufrichtung

- 10: Getriebeelement
- 11: Zahnradelement
- 12: Bezahnung

- 20: Arretierelement
- 21: Grundelement
- 22: Grundhebelelement
- 23: Freigabestellung
- 24: Arretierposition
- 25: Grundachse

- 30: Arretierabschnitt
- 31: Arretierzahn
- 32: Arretierhebel
- 33: Arretierachse
- 34: Funktionsstellung
- 35: Sicherheitsstellung
- 36: Arretieranschlag

- 40: Sicherheitselement
- 41: Sicherheitsfederelement

## Patentansprüche

1. Stellantrieb (1) aufweisend ein Antriebselement (2), einen Abtriebsanschluss (4), ein Rücklauffederelement (5) sowie ein Getriebeelement (10) für einen Federrücklauf des Stellantriebs (1), wobei das Antriebselement (2) über das Getriebeelement (10) mit dem Abtriebsanschluss (4) zum Antreiben des Abtriebsanschlusses (4) in einer Antriebsrichtung (3) mechanisch wirkverbunden ist und wobei das Rücklauffederelement (5) mit dem Antriebselement (2) und/oder dem Getriebeelement (10) und/oder dem Abtriebsanschluss (4) zum Bereitstellen einer Rücklauffunktionalität mechanisch wirkverbunden ist, wobei das Getriebeelement (10) zumindest ein Zahnradelement (11) mit einer wenigstens abschnittsweisen Bezahnung (12) sowie ein Arretierelement (20) aufweist, wobei das Arretierelement (20) einen Arretierabschnitt (30) zum arretierenden Eingreifen in die Bezahnung (12) des zumindest einen Zahnradelements (11) aufweist zum Verhindern einer Rotation des zumindest einen Zahnradelements (11) in einer Rücklaufrichtung (6), **dadurch gekennzeichnet,**
**dass** das Arretierelement (20) ein mit dem Arretierabschnitt (30) mechanisch wirkverbundenes sowie zumindest teilweise elastisch verformbares Sicherheitselement (40) aufweist zum Freigeben der Arretierung des zumindest einen Zahnradelements (11) durch eine elastische Verformung des Sicherheitselements (40) bei einem Drehmoment des zumindest einen Zahnradelements (11) in Rücklaufrichtung (6), welches größer ist als eine Sicherheitsdrehmomentgrenze.

2. Stellantrieb (1) nach Anspruch 1, wobei die Sicherheitsdrehmomentgrenze größer ist als ein durch ein Rücklauffederelement (5) des Federrücklaufs des Stellantriebs (1) am zumindest einen Zahnradelement (11) erzeugbares Drehmoment.

3. Stellantrieb (1) nach einem der vorangegangenen Ansprüche, wobei der Arretierabschnitt (30) einen Arretierzahn (31) zum Eingreifen in die Bezahnung (12) des zumindest einen Zahnradelements (11) aufweist.

4. Stellantrieb (1) nach einem der vorangegangenen Ansprüche, wobei der Arretierabschnitt (30) einen Arretierhebel (32) aufweist, wobei der Arretierhebel (32) an einem Grundelement (21) des Arretierelements (20) um eine Arretierachse (33) drehbar gelagert ist, und wobei ferner der Arretierhebel (32) durch die elastische Verformung des Sicherheitselements (40) aus einer Funktionsstellung (34) in eine Sicherheitsstellung (35) bringbar ist.

5. Stellantrieb (1) nach Anspruch 4, wobei das Sicherheitselement (40) als ein mit dem Arretierhebel (32) mechanisch wirkverbundenes Sicherheitsfederelement (41) ausgebildet ist.

6. Stellantrieb (1) nach Anspruch 4 oder 5, wobei das Arretierelement (20) einen Arretieranschlag (36) zum Begrenzen und/oder Festlegen der Sicherheitsstellung (35) des Arretierhebels (32) aufweist.

7. Stellantrieb (1) nach den Ansprüchen 5 und 6, wobei das Sicherheitsfederelement (41) zwischen dem Arretieranschlag (36) und dem Arretierhebel (32) angeordnet ist.

8. Stellantrieb (1) nach einem der vorangegangenen Ansprüche, wobei das Arretierelement (20) ein Grundhebelelement (22) aufweist, wobei das Grundhebelelement (22) an einer Grundachse (25) drehbar gelagert ist und der Arretierabschnitt (30) beabstandet von der Grundachse (25) am Grundhebelelement (22) angeordnet ist, und wobei ferner das Grundhebelelement (22) in eine Freigabestellung (23), in welcher der Arretierabschnitt (30) das zumindest eine Zahnradelement (11) freigibt, und in eine Arretierposition (24), in welcher der Arretierabschnitt (30) in das zumindest eine Zahnradelement (11) arretierend eingreift, bringbar ist.

9. Stellantrieb (1) nach Anspruch 8, wobei das Grundhebelelement (22) das Sicherheitselement (40) umfasst, und wobei insbesondere das Grundhebelelement (22) das Sicherheitselement (40) bildet.

## Claims

1. Actuating drive (1) having a drive element (2), an output connection (4), a return spring element (5) and a transmission element (10) for a spring return of the actuating drive (1), wherein the drive element (2) is mechanically operatively connected by way of the transmission element (10) to the output connection (4) to drive the output connection (4) in a drive direction (3) and wherein the return spring element (5) is mechanically operatively connected to the drive element (2) and/or the transmission element (10) and/or the output connection (4) to provide return functionality,
wherein the drive element (10) has at least one toothed wheel element (11) with teeth (12) at least in sections and a locking element (20), wherein the locking element (20) has a locking section (30) for locking engagement in the teeth (12) of the at least one toothed wheel element (11) to prevent a rotation of the at least one toothed wheel element (11) in a return direction (6),
**characterised in that**
the locking element (20) has a safety element (40) which is mechanically operatively connected to the locking section (30) and is at least partially elastically deformable in order to release the locking of the at least one toothed wheel element (11) by means of an elastic deformation of the safety element (40) at a torque of the at least one toothed wheel element (11) in the return direction (6) which is greater than a safety torque limit.

2. Actuating drive (1) according to claim 1,
wherein
the safety torque limit is greater than a torque which can be generated by a return spring element (5) of the spring return of the actuating drive (1) on the at least one toothed wheel element (11).

3. Actuating drive (1) according to one of the preceding claims,
wherein
the locking section (30) has a locking tooth (31) for engagement in the teeth (12) of the at least one toothed wheel element (11).

4. Actuating drive (1) according to one of the preceding claims,
wherein
the locking section (30) has a locking lever (32), wherein the locking lever (32) is rotatably mounted on a base element (21) of the locking element (20) around a locking axle (33), and wherein moreover the locking lever (32) can be brought from a functional position (34) into a safety position (35) by means of the elastic deformation of the safety element (40).

5. Actuating drive (1) according to claim 4,
wherein
the safety element (40) is designed as a safety spring element (41) mechanically operatively connected to the locking lever (32) .

6. Actuating drive (1) according to claim 4 or 5,
wherein
the locking element (20) has a locking stop (36) to limit and/or define the safety position (35) of the locking lever (32) .

7. Actuating drive (1) according to claims 5 and 6,
wherein
the safety spring element (41) is arranged between the locking stop (36) and the locking lever (32).

8. Actuating drive (1) according to one of the preceding claims,
wherein
the locking element (20) has a base lever element (22), wherein the base lever element (22) is rotatably mounted on a base axle (25) and the locking section (30) is arranged at a distance from the base axle (25) on the base lever element (22), and wherein moreover the base lever element (22) can be brought into a release position (23) in which the locking section (30) releases the at least one toothed wheel element (11), and into a locking position (24), in which the locking section (30) engages in the at least one toothed wheel element (11) in a locking fashion.

9. Actuating drive (1) according to claim 8,
wherein
the base lever element (22) comprises the safety element (40), and wherein in particular the base lever element (22) forms the safety element (40).

## Revendications

1. Actionneur (1) comportant un élément de commande (2), un raccord de sortie (4), un élément de ressort de rappel (5) ainsi qu'un élément de transmission (10) pour un rappel du ressort de l'actionneur (1), l'élément de commande (2) étant en liaison mécanique active avec le raccord de sortie (4) par le biais de l'élément de transmission (10) pour entraîner le raccord de sortie (4) dans un sens de commande (3), l'élément de ressort de rappel (5) étant en liaison mécanique active avec l'élément de commande (2) et/ou avec l'élément de transmission (10) et/ou le raccord de sortie (4) pour mettre à disposition une fonctionnalité de rappel, l'élément de transmission (10) comportant au moins un élément d'engrenage (11) comprenant des dents (12) au moins sur une partie ainsi qu'un élément d'arrêt (20), l'élément d'arrêt (20) comportant une portion d'arrêt (30) pour prendre dans et ainsi immobiliser les dents (12) de l'au moins un élément d'engrenage (11) pour empêcher la rotation de l'au moins un élément d'engrenage (11) dans un sens de recul,
(6), **caractérisé en ce que**
l'élément d'arrêt (20) comporte un élément de sécurité (40) en liaison mécanique active avec la portion d'arrêt (30) et élastiquement déformable au moins en partie pour débloquer l'au moins un élément d'engrenage (11) par déformation élastique de l'élément de sécurité (40) en cas d'un couple de l'au moins un élément d'engrenage (11) en sens de recul (6) qui est supérieur à une limite de sécurité de couple.

2. Actionneur (1) selon la revendication 1, dans lequel la limite de sécurité de couple est supérieure à un couple susceptible d'être généré par un élément de ressort de rappel (5) du rappel du ressort de l'actionneur (1) sur au moins un élément d'engrenage (11).

3. Actionneur (1) selon l'une des revendications précédentes, dans lequel la portion d'arrêt (30) comporte une dent d'arrêt (31) pour venir en prise avec les dents (12) de l'au moins un élément d'engrenage (11).

4. Actionneur (1) selon l'une des revendications précédentes, dans lequel la portion d'arrêt (30) comporte un levier d'arrêt (32), le levier d'arrêt (32) étant monté mobile en rotation sur un élément de base (21) de l'élément d'arrêt (20) autour d'un axe d'arrêt (33), et dans lequel le levier d'arrêt (32) est susceptible d'être amené, grâce à la déformation élastique de l'élément de sécurité (40), d'une position opérationnelle (34) vers une position de sécurité (35).

5. Actionneur (1) selon la revendication 4, dans lequel l'élément de sécurité (40) est prévu sous forme d'un élément de sécurité à ressort (41) en liaison mécanique active avec le levier d'arrêt (32).

6. Actionneur (1) selon la revendication 4 ou 5, dans lequel l'élément d'arrêt (20) comporte une butée d'arrêt (36) pour limiter et/ou fixer la position de sécurité (35) du levier d'arrêt (32).

7. Actionneur (1) selon les revendications 5 et 6, dans lequel l'élément de sécurité à ressort (41) est disposé entre la butée d'arrêt (36) et le levier d'arrêt (32).

8. Actionneur (1) selon l'une des revendications précédentes, dans lequel l'élément d'arrêt (20) comporte un élément de base de levier (22), l'élément de base de levier (22) étant monté mobile en rotation sur un axe de base (25), la portion d'arrêt (30) étant disposée sur l'élément de base de levier (22) et espacée de l'axe de base (25), l'élément de base de levier (22) étant susceptible d'être amené en une position de dégagement (23) dans laquelle la portion d'arrêt (30) dégage l'au moins un élément d'engrenage (11) et en une position d'arrêt (24) dans laquelle la portion d'arrêt (30) est en prise d'arrêt dans l'au moins un élément d'engrenage (11).

9. Actionneur (1) selon la revendication 8, dans lequel l'élément de base de levier (22) comporte l'élément de sécurité (40) et dans lequel c'est notamment l'élément de base de levier (22) qui constitue l'élément de sécurité (40) .
